# EUROPEAN PATENT APPLICATION

(11) **EP 2 378 117 A1**
(43) Date of publication of application: **19.10.2011**
(21) Application number: 10004077.3
(22) Date of filing: 16.04.2010
(51) Int. Cl.: F03D 9/00, H02K 7/18, H02K 16/00

(54) **Wind turbine**

(71) Applicant: Siemens Aktiengesellschaft, 80333 München (DE)
(72) Inventor: Ventzke, Klaus, 52379 Langerwehe (DE)

(57) **Abstract**

A wind turbine (1, 16), comprising a housing (2) containing a main shaft (3), at least a first generator with a stator (8) and a rotor (12), mounted on a blade side of the main shaft (3) and a second generator with a stator (9) and a rotor (13), mounted on the opposite side of the main shaft (3), whereby the stator (8, 9) is encircled by the belonging rotor (12, 13).

## Description

The present invention relates to a wind turbine, comprising a housing containing a main shaft, at least a first generator with a stator and a rotor, mounted on a blade side of the main shaft and a second generator with a stator and a rotor, mounted on the opposite side of the main shaft.

Wind turbines include blades mounted on a hub attached to a rotor that rotates when wind passes over the blades. The rotation of the rotor is used to drive an electrical generator. Typically the rotor carries conductor windings or coils that face magnetic field generators on a stator such that there is relative motion between the coils and the magnetic field generators in order to produce electricity.

In recent years the engine power of wind turbines has permanently increased. At present wind turbines are developed generating an electrical power of 10 MW. Repowering or the replacement of first generation wind turbines with modern multi Megawatt wind turbines will play a big roll in the international wind energy market in future. There is a need for modern wind turbines where the use of the available wind energy is improved so that the relation between cost and output power can be significantly lowered. The effort of planning and execution with regard to transport, handling and erecting a wind turbine depends on the largeness of the components. It is aspired to improve the power density of wind turbines in order to achieve the maximum utilisation of the available space.

The increase of engine power has caused the enlargement of the generator diameter in direct drive turbines, which do not comprise a separate generator. The big diameter of the direct drive generator caused the enlargement of the total weight and complicated the assembly and transportation of the wind turbine.

From WO 2008/078342 A1 a multiple generator wind turbine is known. This wind turbine comprises two generators mounted on a supporting structure. A first generator is connected to a drive blade arrangement and can selectively be mechanically connected to a second generator via a clutch in order to drive the second generator. This wind power generator is a multipolar, gearless, synchronous generator. The wind turbine comprises a double sided rotor with a stator with permanent magnets on the outer side of the rotor. The rotor is mounted on both sides on a flange which is supported in bearings. A drive shaft which is connected to the flanges transmits the torque to the second generator. The stator is fixed on both sides of the main frame body. One embodiment comprises a wind turbine with a multiple concentric generator. The wind turbine comprises a double sided rotor with permanent magnet on the outer and inner side of the rotor as well as an internal stator, which is directly connected to the main frame as external stator.

It is an object of the invention to provide a wind turbine with a reduced total weight, which is more compact so that transportation is made easier.

According to the present invention this object is achieved in the above defined wind turbine in that the stator is encircled by the belonging rotor.

The invention is based on the idea that the conventional arrangement of rotor and stator can be inverted in order to reduce weight and size of the wind turbine. In conventional wind turbines the stator is positioned at the outer side of the rotor. In contrast to this the rotor of the inventive wind turbine is arranged such that it encircles the stator. In the inventive wind turbine it is preferred that the stators are arranged at the outer side of the housing. The external stators of the permanent magnet synchronous generator are directly installed in or at the housing of the wind turbine.

According to a preferred embodiment of the inventive wind turbine the first rotor is supported by a flange provided at the blade side of the main shaft and the second rotor is supported by a flange provided at the opposite side of the main shaft. Both external rotors are bolted on both sides on a flange which is connected to the main shaft of the wind turbine.

In order to increase the efficiency of the inventive wind turbine the stators can be water cooled. Preferably a water cooling is provided within the housing so that the two stators can be built more compactly, further the electrical efficiency is improved.

It is advantageous that the main shaft of the inventive wind turbine is hollow. The diameter of the main shaft of the wind turbine is much bigger than the drive shaft of conventional wind turbines which is advantageous with regard to the bearing installation.

The inventive wind turbine can be provided with a bearing arrangement comprising a fixed bearing and a floating bearing, connected between the main shaft and the housing, whereby the fixed bearing is a double row spherical roller bearing and the floating bearing is a toroidial roller bearing or a cylindrical roller. Such a bearing arrangement leads to lower costs compared to conventional bearing arrangements, e. g. as disclosed in WO 2008/078342 A1.

According to a particular preferred embodiment of the inventive wind turbine it can comprise a third generator and a forth generator arranged within the housing. In this regard it is preferred that the third and the fourth generator are arranged concentrically with regard to the first and the second generator. The concentric arrangement where the third and fourth generator are arranged such that they encircle the first and second generator leads to a very compact design and a lower ratio of electrical power/weight.

Preferably the rotors of the third and fourth generator are arranged on the main shaft, in particular they can be arranged on a flange which is attached to the main shaft.

According to a preferred embodiment of the inventive wind turbine the rotors of the third and fourth generator can be arranged adjacent to the bearing of the main shaft.

The invention and its underlying principle will be better understood when consideration is given to the following detailed description of preferred embodiments.

In the accompanying drawings:
- Fig. 1: is a schematic representation of a first embodiment of an inventive wind turbine in a sectional view; and
- Fig. 2: shows a second embodiment of an inventive wind turbine in a sectional view.

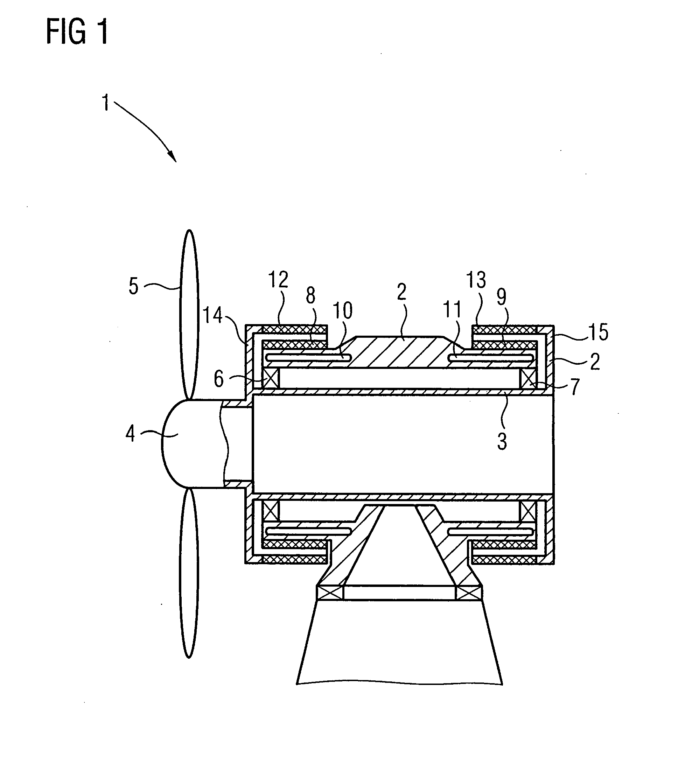

Fig. 1 shows a wind turbine in a sectional view, comprising a housing 2 containing a hollow main shaft 3 which can be rotated. The housing 2 is mounted on a tower. A hub 4 is connected to the main shaft 3, blades 5 are mounted on the hub 4. When wind passes over the blades 5 the hub 4 and the main shaft 3 are rotated. A bearing arrangement comprising a fixed bearing 6 and a floating bearing 7 is arranged within the housing 2. The fixed bearing 6 is installed as a double row spherical roller bearing or a double row tapered roller bearing, the floating bearing 7 is formed as a toroidial roller bearing or a cylindrical roller bearing.

A first stator 8 is mounted on the blade side of the wind turbine 1, a second stator 9 is mounted on the opposite side. Both stators 8, 9 are formed as rings which are arranged at the outer side of the housing 2. A water cooling system 11 is assigned to each stator 8, 9.

External rotors 12, 13 are arranged on flanges 14, 15, which are connected to the rigid hollow main shaft 3. The fixed bearing 6 on the blade side is connected to the housing 2 and the main shaft 3 by shrink fits. The floating bearing 7 is also directly connected to the housing 2 and the main shaft 3. The blade side flange 14 is directly connected to the hub 4 and torque is transmitted to the generator comprising stator 9, rotor 13 and flange 15 by the hollow main shaft 3.

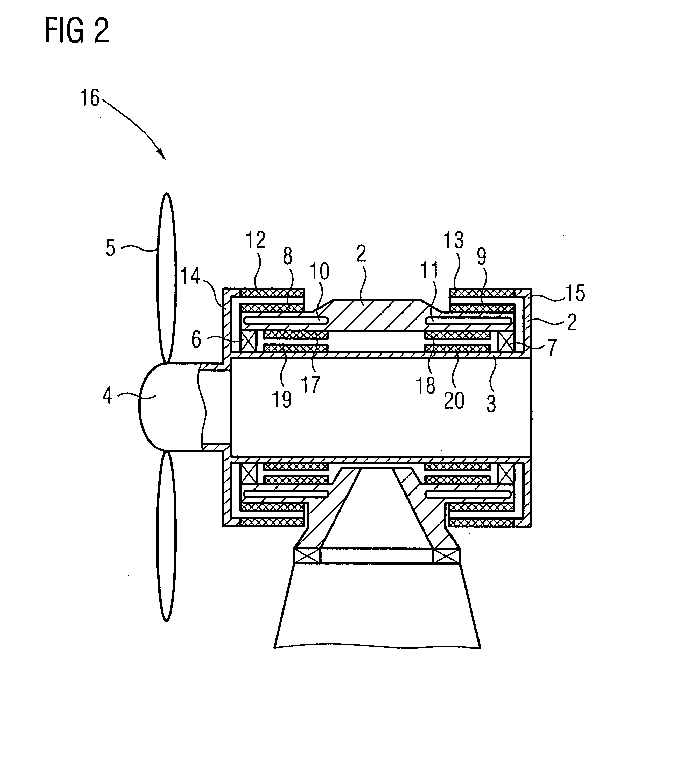

Fig. 2 shows another embodiment of a wind turbine 16, whereby alike reference signs are used for alike components. Components which are identical to those of the embodiment of fig. 1 are not explained in detail again. In addition to the components of the wind turbine of fig. 1 the wind turbine 16 comprises a third stator 17 and a fourth stator 18 which are mounted within the housing 2. The water cooling 10, 11 is arranged between the stators 8, 17 and 9, 18 so that the stators 17, 18 are cooled as well. A third rotor 19 and a fourth rotor 20 are mounted on the outer side of the main shaft 3 so that they face the stators 17, 18. The stators 17, 18 are arranged concentrically with regard to the rotors 19, 20 as well as with regard to the rotors 12, 13.

The wind turbine 16 is compact, has a reduced total weight and a reduced weight of the magnets of the stators.

## Claims

1. A wind turbine (1, 16), comprising a housing (2) containing a main shaft (3), at least a first generator with a stator (8) and a rotor (12), mounted on a blade side of the main shaft (3) and a second generator with a stator (9) and a rotor (13), mounted on the opposite side of the main shaft (3), **characterised in that** the stator (8, 9) is encircled by the belonging rotor (12, 13).

2. A wind turbine according to claim 1, **characterised in that** the stators (8, 9) are arranged at the outer side of the housing (2).

3. A wind turbine according to claim 1 or 2, **characterised in that** the first rotor (12) is supported by a flange (14) provided at the blade side of the main shaft (3) and the second rotor (13) is supported by a flange (15) provided at the opposite side of the main shaft (3).

4. A wind turbine according to any of the preceding claims, **characterised in that** stators (8, 9) are water cooled.

5. A wind turbine according to claim 4, **characterised in that** a water cooling (10, 11) is provided within the housing (3).

6. A wind turbine according to any of the preceding claims, **characterised in that** the main shaft (3) is hollow.

7. A wind turbine according to any of the preceding claims, **characterised in that** a bearing arrangement comprising a fixed bearing (6) and a floating bearing (7) is provided, connected between the main shaft (3) and the housing (2), whereby the fixed bearing (6) is a double row spherical roller bearing or a double row tapered roller bearing and the floating bearing (7) is a toroidial roller bearing or a cylindrical roller bearing.

8. A wind turbine according to any of the preceding claims, **characterised in that** it comprises a third generator and a fourth generator.

9. A wind turbine according to claim 8, **characterised in that** the third and the fourth generator are arranged concentrically with regard to the first and the second generator.

10. A wind turbine according to claim 8 or 9, **characterised in that** the rotors (19, 20) of the third and fourth generator are mounted on the main shaft (3).

11. A wind turbine according to any of claims 8 to 10, **characterised in that** the rotors (19, 20) of the third and fourth generator are arranged adjacent to the bearing of the main shaft (3).
